# EUROPEAN PATENT APPLICATION

(11) **EP 4 227 089 A1**
(43) Date of publication of application: **16.08.2023**
(21) Application number: 21877532.8
(22) Date of filing: 01.10.2021
(51) Int. Cl.: B32B 27/36, B65D 65/02, B65D 65/40, C08K 13/02, C08L 67/04, C08L 101/16

(54) **MULTILAYER FILM AND PACKAGING MATERIAL**

(30) Priority: 07.10.2020 JP 2020169624; 07.10.2020 JP 2020169742
(71) Applicant: Kaneka Corporation, Osaka-shi, Osaka 530-8288 (JP)
(72) Inventor: MIAO, Wei, Osaka 566-0072 (JP); SUGIYAMA, Takeshi, Osaka 566-0072 (JP); SAITO, Arihiro, Osaka 566-0072 (JP); MURASAWA, Shun, Osaka 566-0072 (JP); OKURA, Tetsuo, Osaka 566-0072 (JP)
(74) Representative: Vossius & Partner Patentanwälte Rechtsanwälte mbB
(86) International application number: PCT/JP2021/036494
(87) International publication number: WO 2022/075233

(57) **Abstract**

A multilayer film includes a first resin layer and a second resin layer. Each of the first and second resin layers contains a poly(3-hydroxyalkanoate) resin. The ratio of the thickness of the first resin layer to the thickness of the second resin layer is from 1.0:0.015 to 1.0:5.0. A heat quantity ΔH of the first resin layer is 30 J/g or more, and a heat quantity ΔH of the second resin layer is 25 J/g or less. The heat quantity ΔH of each of the first and second resin layers is heat of melting over a temperature range of 130 to 190°C.

## Description

### Technical Field

The present invention relates to a multilayer film including a resin layer containing a poly(3-hydroxyalkanoate) resin and a packaging material in which the multilayer film is used.

### Background Art

A huge amount of petroleum-based plastics are discarded as waste every year. The huge amount of waste plastics have brought about the problems of a shortage of landfill sites and environmental pollution, and these problems have become a serious concern. Additionally, in recent years, microplastics have caused significant harm to the marine environment.

Poly(3-hydroxyalkanoate) resins are highly degradable in seawater and can be a solution to the environmental problems induced by discarded plastics. For example, poly(3-hydroxybutyrate-co-3-hydroxyhexanoate) is one of the poly(3-hydroxyalkanoate) resins, and the mechanical properties of this resin can be flexibly controlled by changing the proportion of 3-hydroxyhexanoate. The poly(3-hydroxyalkanoate) resins have higher gas barrier performance and are more resistant to hydrolysis than other biodegradable resins and are promising for a wide range of applications such as the use in packaging materials.

A multilayer film containing a poly(3-hydroxyalkanoate) resin is described, for example, in Patent Literature 1. The multilayer film of Patent Literature 1 includes a layer containing a poly(3-hydroxyalkanoate) resin and another biodegradable resin and a layer having a poly(3-hydroxyalkanoate) resin content of less than 10 wt%.

Patent Literature 2 describes a multilayer film including a layer made of a composition containing a poly(3-hydroxyalkanoate) resin and destructurized starch and a layer made of a poly(3-hydroxyalkanoate) resin.

For example, in food products, multilayer films may be used as films for heat sealing in which the films are thermally fused into the form of a pouch in order to increase the airtightness and shelf life of the food products. However, Patent Literatures 1 and 2 fail to specifically discuss the use of multilayer films in heat sealing.

### Citation List

### Patent Literature

PTL 1: Japanese Laid-Open Patent Application Publication No. 2014-144553
PTL 2: Japanese Laid-Open Patent Application Publication (Translation of PCT Application) No. 2005-507018

### Summary of Invention

### Technical Problem

When the multilayer film as described in Patent Literature 1 or 2 is subjected to heat sealing, the resulting bond strength could be unsatisfactory owing to insufficient heat sealability of the film, or the base layer of the film could be deformed due to heating during the heat sealing.

In view of the above circumstances, the present invention aims to provide a multilayer film that includes a resin layer containing a poly(3-hydroxyalkanoate) resin, that has high heat sealability, and whose base layer is resistant to deformation during heat sealing.

### Solution to Problem

As a result of intensive studies with the goal of solving the above problem, the present inventors have found that a multilayer film including two layers each of which contains a poly(3-hydroxyalkanoate) resin can be a solution to the problem when the thickness ratio between the two layers is set in a given range and heat quantities ΔH of the layers are set in given ranges, respectively. Based on this finding, the inventors have completed the present invention.

Specifically, the present invention relates to a multilayer film including: a first resin layer; and a second resin layer, wherein each of the first and second resin layers contains a poly(3-hydroxyalkanoate) resin, a ratio of a thickness of the first resin layer to a thickness of the second resin layer is from 1.0:0.015 to 1.0:5.0, a heat quantity ΔH of the first resin layer is 30 J/g or more, a heat quantity ΔH of the second resin layer is 25 J/g or less, and the heat quantity ΔH of each of the first and second resin layers is expressed by the following formula: heat quantity ΔH = heat of melting over a temperature range of 130 to 190°C.

Preferably, the thickness of the first resin layer is from 10 to 300 µm.

Preferably, the poly(3-hydroxyalkanoate) resin includes a copolymer of 3-hydroxybutyrate units and other hydroxyalkanoate units.

Preferably, the poly(3-hydroxyalkanoate) resin of the first resin layer is a copolymer which is a copolymer of 3-hydroxybutyrate units and other hydroxyalkanoate units and in which a content of the other hydroxyalkanoate units is from 1 to 7 mol%, the poly(3-hydroxyalkanoate) resin of the second resin layer is a copolymer which is a copolymer of 3-hydroxybutyrate units and other hydroxyalkanoate units and in which a content of the other hydroxyalkanoate units is from 7 to 20 mol%, and the content of the other hydroxyalkanoate units in the poly(3-hydroxyalkanoate) resin of the second resin layer is higher than the content of the other hydroxyalkanoate units in the poly(3-hydroxyalkanoate) resin of the first resin layer.

Preferably, the other hydroxyalkanoate units are 3-hydroxyhexanoate units.

Preferably, the first and second resin layers are integral with each other.

Preferably, the thickness of the first resin layer is from 10 to 300 µm, and the thickness of the second resin layer is from 5 to 70 µm.

Preferably, the first resin layer and/or the second resin layer further contains a nucleating agent. Preferably, the nucleating agent includes at least one selected from the group consisting of poly(3-hydroxybutyrate) (P3HB), talc, a fatty acid amide, a nucleic acid base, and a dipeptide.

Preferably, the multilayer film is adapted for heat sealing.

The present invention further relates to a method for producing the multilayer film, the method including the steps of (A) forming each of the first and second resin layers individually by blown film molding or T-die molding; and (B) integrating the first and second resin layers obtained in the step (A) by thermal lamination, or the method including the step of forming the first and second resin layers together by multilayer blown film molding or multilayer T-die molding.

The present invention further relates to a packaging material including the multilayer film. Preferably, the packaging material is in the form of a pillow pack.

### Advantageous Effects of Invention

The present invention can provide a multilayer film that includes a resin layer containing a poly(3-hydroxyalkanoate) resin, that has high heat sealability, and whose base layer is resistant to deformation during heat sealing.

### Brief Description of Drawings

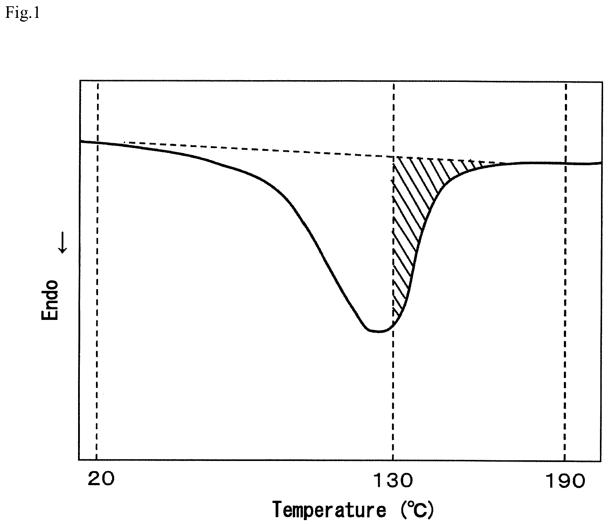

FIG. 1 illustrates a heat quantity ΔH in an example of a DSC curve measured for a resin layer.

### Description of Embodiments

A multilayer film according to one embodiment of the present invention includes first and second resin layers each of which contains a poly(3-hydroxyalkanoate) resin. The multilayer film can be used as a multilayer film for heat sealing. In this usage, the first resin layer can serve as a base layer, and the second resin layer can serve as a heat sealing layer.

The second resin layer serving as a heat sealing layer may be disposed over only one side of the first resin layer serving as a base layer or over both sides of the first resin layer. The second resin layer may be disposed over the first resin layer with another layer interposed between the first and second resin layers or may be disposed directly on the first resin layer without any other layer interposed between the first and second resin layers.

Each of the first and second resin layers contains at least a poly(3-hydroxyalkanoate) resin.

The poly(3-hydroxyalkanoate) resin is preferably a polymer containing 3-hydroxyalkanoate units, in particular a polymer containing units represented by the following formula (1).

[-CHR-CH₂-CO-O-] (1)

In the formula (1), R is an alkyl group represented by CₚH₂ₚ₊₁, and p is an integer from 1 to 15. Examples of the R group include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) resin is particularly preferably a microbially produced poly(3-hydroxyalkanoate) resin. In the microbially produced poly(3-hydroxyalkanoate) resin, all of the 3-hydroxyalkanoate units are contained as (R)-3-hydroxyalkanoate units.

The poly(3-hydroxyalkanoate) resin contains 50 mol% or more of 3-hydroxyalkanoate units (in particular, the units represented by the formula (1)) in the total structural units, and the content of the 3-hydroxyalkanoate units is more preferably 60 mol% or more and even more preferably 70 mol% or more. The poly(3-hydroxyalkanoate) resin may contain only one type or two or more types of 3-hydroxyalkanoate units as polymer structural units or may contain other units (such as 4-hydroxyalkanoate units) in addition to the one type or two or more types of 3-hydroxyalkanoate units.

The poly(3-hydroxyalkanoate) resin is preferably a homopolymer or copolymer containing 3-hydroxybutyrate (hereinafter also referred to as "3HB") units. In particular, all of the 3-hydroxybutyrate units are preferably (R)-3-hydroxybutyrate units. The poly(3-hydroxyalkanoate) resin is preferably a copolymer of 3-hydroxybutyrate units and other hydroxyalkanoate units. The copolymerization is not limited to a particular type and may be random copolymerization, alternating copolymerization, block copolymerization, or graft copolymerization.

Specific examples of the poly(3-hydroxyalkanoate) resin include poly(3-hydroxybutyrate) abbreviated as "P3HB", poly(3-hydroxybutyrate-co-3-hydroxypropionate), poly(3-hydroxybutyrate-co-3-hydroxyvalerate) abbreviated as "P3HB3HV", poly(3-hydroxybutyrate-co-3-hydroxyvalerate-3-hydroxyhexanoate), poly(3-hydroxybutyrate-co-3-hydroxyhexanoate) abbreviated as "P3HB3HH", poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as "P3HB4HB". In particular, in terms of factors such as the film productivity and the mechanical properties of the film, P3HB3HH, P3HB3HV, and P3HB4HB are preferred, and P3HB3HH and P3HB4HB are more preferred. P3HB, which is a homopolymer, can be used also as a nucleating agent as described later.

P3HB3HH is particularly preferred for the following reasons: the ratio between the repeating units can be varied to change the melting point and crystallinity and thus adjust the physical properties such as the Young's modulus and heat resistance to levels intermediate between those of polypropylene and polyethylene; and this plastic is easy to industrially produce as mentioned above and useful in terms of physical properties. P3HB3HH is preferred also in that it can have a low melting point and be moldable at low temperature.

In one preferred embodiment, each of the first and second resin layers preferably contains a copolymer of 3-hydroxybutyrate units and other hydroxyalkanoates and particularly preferably contains P3HB3HH (poly(3-hydroxybutyrate-co-3-hydroxyhexanoate)). When the first or second resin layer contains such a copolymer, the layer may contain only one such copolymer or at least two such copolymers differing in the types and/or contents of the constituent monomers. Each of the layers may contain at least one such copolymer and P3HB.

The copolymer of the first resin layer and the copolymer of the second resin layer differ in the types and/or contents of the constituent monomers such that requirements concerning heat quantities ΔH as described later are satisfied. The content of the other hydroxyalkanoate units (in particular, 3-hydroxyhexanoate units) in the copolymer of the second resin layer is preferably higher than the content of the other hydroxyalkanoate units (in particular, 3-hydroxyhexanoate units) in the copolymer of the first resin layer. In this case, the second resin layer has a smaller value of heat quantity ΔH and a lower melting point than the first resin layer; thus, upon heating in heat sealing, the second resin layer tends to readily melt even as the first resin layer resists melting. This can prevent deformation of the base layer and at the same time allow the heat sealing layer to exhibit high heat sealability.

Specifically, in the copolymer of the first resin layer, the content of the other hydroxyalkanoate units is preferably from 1 to 7 mol%, more preferably from 3 to 7 mol%, and even more preferably from 5 to 7 mol%.

In the copolymer of the second resin layer, the content of the other hydroxyalkanoate units is preferably from 7 to 20 mol%, more preferably from 8 to 20 mol%, even more preferably from 8 to 15 mol%, and still even more preferably from 9 to 13 mol%.

It should be noted that the content of the other hydroxyalkanoate units in the poly(3-hydroxyalkanoate) resin of the second resin layer is higher than the content of the other hydroxyalkanoate units in the poly(3-hydroxyalkanoate) resin of the first resin layer.

The use of the above different copolymers in the two layers makes it easy to ensure heat quantities ΔH as described later for the first and second resin layers.

The average content of certain monomer units in the total monomer units constituting a poly(3-hydroxyalkanoate) resin can be determined by a method known to those skilled in the art, such as by a method described in paragraph [0047] of WO 2013/147139. When each layer contains a mixture of two or more poly(3-hydroxyalkanoate) resins, the "average content" of certain monomer units refers to the average content of the monomer units contained in the total mixture.

In one embodiment, the weight-average molecular weight of the poly(3-hydroxyalkanoate) resin of the first resin layer is preferably from 20 × 10⁴ to 250 × 10⁴, more preferably from 25 × 10⁴ to 230 × 10⁴, even more preferably from 30 × 10⁴ to 200 × 10⁴, and particularly preferably from 35 × 10⁴ to 150 × 10⁴. When the weight-average molecular weight of the poly(3-hydroxyalkanoate) resin of the first resin layer is in the above range, deformation of the first resin layer due to heating during heat sealing can be more effectively prevented.

In one embodiment, the weight-average molecular weight of the poly(3-hydroxyalkanoate) resin of the second resin layer is preferably from 5 × 10⁴ to 100 × 10⁴, more preferably from 10 × 10⁴ to 80 × 10⁴, even more preferably from 15 × 10⁴ to 60 × 10⁴, and particularly preferably from 15 × 10⁴ to 50 × 10⁴. When the weight-average molecular weight of the poly(3-hydroxyalkanoate) resin of the second resin layer is in the above range, the second resin layer subjected to heat sealing can exhibit a higher bond strength.

The method for measuring the weight-average molecular weight of each poly(3-hydroxyalkanoate) resin is not limited to a particular technique. For example, the weight-average molecular weight can be determined as a polystyrene-equivalent weight-average molecular weight by using chloroform as a mobile phase, GPC system manufactured by Waters Corporation as a chromatography system, and Shodex K-804 (polystyrene gel) manufactured by Showa Denko K.K. as a column.

The method for producing each poly(3-hydroxyalkanoate) resin is not limited to a particular technique, and may be a chemical synthesis production method or a microbial production method. A microbial production method is more preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) having a poly(3-hydroxyalkanoate) resin synthase gene introduced is more preferred. Such a microorganism is cultured under suitable conditions to allow the microorganism to accumulate P3HB3HH in its cells, and the microbial cells accumulating P3HB3HH are used. Instead of the above microorganism, a genetically modified microorganism having any suitable poly(3-hydroxyalkanoate) resin synthesis-related gene introduced may be used depending on the poly(3-hydroxyalkanoate) resin to be produced. The culture conditions including the type of the substrate may be optimized depending on the poly(3-hydroxyalkanoate) resin to be produced.

Microbially produced P3HB3HH is a random copolymer. The adjustment of the 3HH unit content of microbially produced P3HB3HH can be accomplished, for example, by selection of a suitable bacterium, by selection of a suitable carbon source as a raw material, by blending of two or more types of P3HB3HH having different 3HH unit contents, or by addition of a homopolymer of 3HB.

An example of commercially-available P3HB3HH is "Kaneka Biodegradable Polymer PHBH^{™}" of Kaneka Corporation.

### (Additional Resin)

The first or second resin layer may contain one or two or more additional resins in addition to the poly(3-hydroxyalkanoate) resin so long as the effect of the invention is achieved. The additional resins are preferably biodegradable resins, examples of which include: aliphatic polyester resins such as polybutylene succinate, polybutylene succinate adipate, polycaprolactone, and polylactic acid; and aliphatic-aromatic polyester resins such as polybutylene adipate terephthalate, polybutylene sebacate terephthalate, and polybutylene azelate terephthalate.

These additional resins lack sufficient seawater degradability although they are biodegradable. Thus, the amount of the additional resins is preferably small in order to ensure the seawater degradability of the multilayer film. Specifically, the amount of the additional resins contained in the multilayer film is preferably 30 parts by weight or less, more preferably 20 parts by weight or less, even more preferably 10 parts by weight or less, and particularly preferably 5 parts by weight per 100 parts by weight of the multilayer film. The lower limit of the amount of the additional resins is not limited to a particular value and may be 0 part by weight.

### (Nucleating Agent)

In one embodiment, the first or second resin layer may further contain a nucleating agent so long as the effect of the invention is achieved. When the first or second resin layer contains a nucleating agent, the nucleating agent provides an improving effect on moldability, productivity, etc.

The nucleating agent is not limited to a particular type and may be any nucleating agent that provides the above effect. Examples of the nucleating agent include poly(3-hydroxybutyrate) (P3HB), talc, fatty acid amides, nucleic acid bases (such as adenine, guanine, thymine, cytosine, uracil, and their derivatives), dipeptides (such as glycylglycine and glycyl-L-leucine), pentaerythritol, orotic acid, aspartame, cyanuric acid, glycine, zinc phenylphosphonate, and boron nitride. Among these, pentaerythritol is preferred because it is particularly superior in accelerating effect on crystallization of the poly(3-hydroxyalkanoate) resin. One of these nucleating agents may be used alone, or two or more thereof may be used in combination.

When P3HB is used as a nucleating agent, the amount of the nucleating agent contained in the first or second resin layer is preferably 10 wt% or less and more preferably 7 wt% or less so that the viscosity during the film production process and the physical properties of the multilayer film may fall within suitable ranges. The lower limit of the amount of the nucleating agent is not limited to a particular value and may be 0 wt%. In order to accelerate the crystallization of the poly(3-hydroxyalkanoate) resin, the amount of the nucleating agent is preferably 1 wt% or more and more preferably 3 wt% or more.

When a nucleating agent other than P3HB is used, the amount of the nucleating agent contained in the first or second resin layer is preferably 5 wt% or less and more preferably 3 wt% or less so that the viscosity during the film production process and the physical properties of the multilayer film may fall within suitable ranges. The lower limit of the amount of the nucleating agent is not limited to a particular value and may be 0 wt%. In order to accelerate the crystallization of the poly(3-hydroxyalkanoate) resin, the amount of the nucleating agent is preferably 0.1 wt% or more and more preferably 0.5 wt% or more.

When the multilayer film is used as a packaging material, the second resin layer is preferably free of any nucleating agent other than P3HB in terms of ensuring high heat sealability.

### (Additives)

The first or second resin layer may contain additives commonly used in the technical field so long as the effect of the invention is achieved. Examples of the additives include: inorganic fillers such as talc, calcium carbonate, mica, silica, titanium oxide, and alumina; organic fillers such as chaff, wood powder, waste paper (e.g., newspaper), various kinds of starch, and cellulose; colorants such as pigments and dyes; odor absorbers such as activated carbon and zeolite; flavors such as vanillin and dextrin; and various other additives such as plasticizers, oxidation inhibitors, antioxidants, weathering resistance improvers, ultraviolet absorbers, lubricants, mold releases, water repellents, antimicrobials, slidability improvers, tackifiers, fillers, crosslinking agents (e.g., peroxides), and chemicals. The first or second resin layer may contain only one additive or may contain two or more additives. The amount of the additives can be set by those skilled in the art as appropriate depending on the intended use.

### (Heat Quantity ΔH)

In one embodiment, the layer thickness ratio described later is within a given range, a heat quantity ΔH of the first resin layer is equal to or greater than a given value, and a heat quantity ΔH of the second resin layer is equal to or smaller than a given value. Thus, the multilayer film can exhibit high heat sealing strength and at the same time resist deformation of the base layer during heat sealing. Specifically, the heat quantity ΔH of the first resin layer is set to 30 J/g or more, and the heat quantity ΔH of the second resin layer is set to 25 J/g or less. The heat quantity ΔH of each of the resin layers is expressed by the following formula: heat quantity ΔH = heat of melting over a temperature range of 130 to 190°C.

The details of how to measure the heat quantity ΔH of each of the resin layers will be described in "Examples".

Since the heat quantity ΔH of the first resin layer and the heat quantity ΔH of the second resin layer are set to given different ranges as described above, the second resin layer has a lower melting point than the first resin layer. Thus, upon heating in heat sealing, the second resin layer tends to readily melt even as the first resin layer resists melting. This can prevent deformation of the base layer and at the same time allow the heat sealing layer to exhibit high heat sealability.

The heat quantity ΔH of the first resin layer is preferably 32 J/g or more, more preferably 35 J/g or more, and even more preferably 38 J/g or more. The upper limit of the heat quantity ΔH is not limited to a particular value. The heat quantity ΔH is typically 100 J/g or less, preferably 70 J/g or less, and more preferably 50 J/g or less.

The heat quantity ΔH of the second resin layer is preferably 24 J/g or less, more preferably 22 J/g or less, even more preferably 20 J/g or less, and particularly preferably 18 J/g or less. The lower limit of the heat quantity ΔH is not limited to a particular value. The heat quantity ΔH may be 0 J/g or more, and is preferably 5 J/g or more and more preferably 10 J/g or more.

The heat quantity ΔH of each layer can be controlled in the desired range, for example, by appropriately selecting the types and/or contents of the constituent monomers of the poly(3-hydroxyalkanoate) resin forming the layer.

### (Layer Thickness)

Not only the heat quantity ΔH of each of the first and second resin layers but also the thickness ratio between the first and second resin layers is controlled in a given range. Thus, the multilayer film can exhibit high heat sealing strength and at the same time resist deformation of the base layer during heat sealing. Specifically, the ratio of the thickness of the first resin layer to the thickness of the second resin layer is from 1.0:0.015 to 1.0:5.0. The thickness ratio is preferably from 1.0:0.1 to 1.0:3.3, more preferably from 1.0:0.2 to 1.0:2.5, even more preferably from 1.0:0.3 to 1.0:2.0, and particularly preferably from 1.0:0.5 to 1.0:1.5.

The thickness of the first resin layer is not limited to a particular range. In terms of heat sealing strength and resistance to base layer deformation during heat sealing, the thickness of the first layer is preferably from 10 to 300 µm, more preferably from 20 to 200 µm, and even more preferably from 30 to 150 µm. Further, in terms of resistance to base layer deformation during high-temperature heat sealing, the thickness of the first resin layer is preferably 50 µm or more and more preferably 80 µm or more. In terms of mechanical strength, the thickness of the first resin layer may be 10 µm or more or may be 30 µm or more. In terms of productivity, the thickness of the first resin layer may be 300 µm or less, may be 100 µm or less, or may be 70 µm or less.

The thickness of the second resin layer is not limited to a particular range. In terms of heat sealing strength and resistance to base layer deformation during heat sealing, the thickness of the second resin layer is preferably from 5 to 200 µm, more preferably from 10 to 150 µm, and even more preferably from 20 to 100 µm. In terms of productivity, the thickness of the second resin layer may be 70 µm or less or may be 50 µm or less.

The overall thickness of the multilayer film can be set as appropriate depending on the intended use and other factors. When the multilayer film is used as a packaging material, the overall thickness of the multilayer film is preferably 15 µm or more, more preferably 30 µm or more, and even more preferably 50 µm or more in terms of mechanical strength and barrier performance. In terms of economic efficiency, the overall thickness of the multilayer film is preferably 300 µm or less, more preferably 250 µm or less, and even more preferably 200 µm or less. In terms of economic efficiency, the overall thickness of the multilayer film may be 150 µm or less or may be 100 µm or less.

### (Additional Layer)

The multilayer film may, if necessary, include an additional layer in addition to the first and second resin layers, and the additional layer may be disposed at any location, such as between the first and second resin layers, outside the first resin layer (on that surface of the first resin layer which faces away from the second resin layer), or outside the second resin layer (on that surface of the second resin layer which faces away from the first resin layer). Examples of the additional layer include a barrier layer, a vapor-deposited layer, a print layer, a base layer, a reinforcing layer made of biodegradable resin, and an adhesive layer. There may be only one such additional layer or may be a plurality of such additional layers. To render heat sealing on the second resin layer feasible, the multilayer film preferably includes no additional layer disposed outside the second resin layer serving as a heat sealing layer. That is, the second resin layer is preferably an outermost layer of the multilayer film.

### (Integration)

In the multilayer film according to the present embodiment, the first and second resin layers are preferably integral with each other. In this case, the multilayer film can have high piercing resistance.

In the present specification, the term "integral" is intended to mean that the first and second resin layers are adjacent and joined directly or indirectly with an additional layer interposed between the first and second resin layers and that part of the resin forming at least one of the first and second resin layers is heat-fused to the other adjacent layer to bond the layers to each other. In the present specification, the term "heat-fused" is intended to mean that a resin melted or softened by heating adheres to another substance. Thus, in the case where two layers are bonded to each other by means other than heat fusion, such as when the first and second resin layers are merely pressure-bonded with a pressure-sensitive adhesive interposed between the first and second resin layers, the first and second resin layers are not considered to be "integral" with each other. Whether the layers are "integral" with each other can be evaluated based on "peel strength" as described below.

In one embodiment, the first and second resin layers are preferably integral with each other such that the peel strength between the layers is 3 N/15 mm or more, more preferably such that the peel strength is 5 N/15 mm or more, and even more preferably such that the peel strength is 6 N/15 mm or more. When the peel strength between the first and second resin layers is 3 N/15 mm or more, higher piercing resistance can be achieved. In the present specification, the peel strength between the first and second resin layers is a parameter measured by a method described in Examples below. In the case where the test specimen includes an additional layer between the first and second resin layers, the peel strength between the first and second resin layers refers to a peel strength at the interface where the peeling occurs.

In the multilayer film of a preferred embodiment, the first and second resin layers are adjacent and joined directly, and part of the resin forming one of the layers and part of the resin forming the other layer mix together at the interface between the layers, which are thus bonded to each other. The partial mixing of the resins of the layers at the interface leads to higher piercing resistance.

### (Method for Producing Multilayer Film)

In one embodiment, the multilayer film can be produced by multilayer blown film molding, multilayer T-die molding, or extrusion lamination.

The multilayer blown film molding and multilayer T-die molding are performed using a multilayer blown film molding device and a multilayer T-die molding device, respectively. In either molding process, molten resin compositions for forming the layers are stacked on each other and co-extruded.

In the extrusion lamination, at least one of the resin layers is formed as a film, onto which a molten composition for forming the other resin layer is extruded. In terms of factors such as film production performance and extrusion performance, it is preferable that the first resin layer having a low content of structural units derived from 3-hydroxyhexanoate be formed as a film, an additional resin layer be placed on the film if necessary, and a molten composition for forming the second resin layer having a high content of structural units derived from 3-hydroxyhexanoate be extruded onto the film.

In the multilayer blown film molding, multilayer T-die molding, or extrusion lamination, the temperature during extrusion molding can be set as appropriate depending on the properties such as melting point and MFR of the resin compositions for forming the layers. In terms of resin fluidity and curing speed, the temperature during extrusion molding is preferably, for example, from 150 to 180°C and more preferably from 155 to 170°C.

A suitable method for producing the multilayer film is to form each of the first and second resin layers individually by blown film molding or T-die molding and then integrate the two layers by thermal lamination. When an additional layer is to be disposed between the first and second resin layers, the first and second resin layers may be integrated by thermal lamination with the additional layer interposed between the first and second resin layers.

In the thermal lamination, the lamination temperature can be set as appropriate depending on the properties such as melting point and MFR of the resin compositions for forming the layers. In terms of film dimensional stability, the lamination temperature is preferably, for example, from 90 to 130°C and more preferably from 95 to 120°C.

Yet another method for producing the multilayer film is to form at least one of the resin layers as a film, apply an aqueous coating liquid for forming the other layer to one side or both sides of the film, and heat and dry the applied coating liquid into the other resin layer.

### (Packaging Material)

The second resin layer, whose heat quantity ΔH is smaller than that of the first resin layer, has a lower melting point than the first resin layer and can thus exhibit high heat sealability. As such, the multilayer film can be suitably used as a packaging material in an application involving heat sealing.

When the multilayer film is used as a packaging material, it is preferable, in terms of handleability and heat sealability, that the first resin layer be an outer layer of the packaging material and the second resin layer be an inner layer of the packaging material. By subjecting the packaging material including the multilayer film to heat sealing such that the second resin layer serves as an innermost layer, a packaging pouch or container having sufficient sealing strength can be produced. A particularly preferred embodiment can provide a pillow pack having the second resin layer as a heat sealing layer.

### (Heat Sealing)

In heat sealing of the multilayer film, for example, two pieces or portions of the multilayer film may be placed on each other such that the second resin layers of the two pieces or portions are in face-to-face contact, and then heat and pressure may be applied to the second resin layers through the first resin layers to melt the second layers and bond the second layers to each other. The heat sealing conditions such as heating temperature, heating time, and pressure are not limited to particular ranges and may be set as per common practice. For example, the heating temperature during heat sealing is preferably from 100 to 150°C and more preferably from 110 to 140°C.

### Examples

Hereinafter, the present invention will be specifically described using examples. The present invention is not limited by these examples in any respect.

The following lists materials used in Examples 1 to 4 and Comparative Examples 1 and 2.
[Poly(3-hydroxyalkanoate) Resins]
P3HB3HH-1: P3HB3HH (average content ratio 3HB/3HH = 93/7 (mol%/mol%), weight-average molecular weight = 74 × 10⁴ g/mol)
This resin was produced according to a method described in Example 2 of WO 2010/13483.
P3HB3HH-2: P3HB3HH (average content ratio 3HB/3HH = 91/9 (mol%/mol%), weight-average molecular weight = 72 × 10⁴ g/mol)
This resin was produced according to a method described in Example 2 of WO 2010/13483.
P3HB3HH-3: P3HB3HH (average content ratio 3HB/3HH = 91/9 (mol%/mol%), weight-average molecular weight = 42 × 10⁴ g/mol)
This resin was produced according to a method described in Example 2 of WO 2010/13483.

### [Nucleating Agent]

Behenamide (BNT-22H manufactured by Nippon Fine Chemical Co., Ltd.)

### [Evaluation Methods]

The following describes methods used for evaluation in Examples 1 to 4 and Comparative Examples 1 and 2.

### • Measurement of Heat Quantities ΔH of Resin Layers

Each of the first and second layers was prepared as a single-layer film, which was used as a sample. The measurement was conducted using a DSC system (DSC 214 Polyma manufactured by NETZSCH) over a temperature range of -20 to 190°C at a temperature increase rate of 10°C/min. Thus, a DSC curve as shown in FIG. 1 was obtained for each layer. In the DSC curve, baselines observed before the onset of melting and after the end of melting were connected by a straight line. In the zone surrounded by the straight line and the DSC curve, the area of the region (heat of melting) over the range of 130 to 190°C was determined as the heat quantity ΔH of the layer. The heat quantity ΔH is a value corresponding to the area of the hatched region in FIG. 1.

### • Measurement of Heat Sealing Strength

The multilayer film was cut into two rectangular pieces with a size of 15 mm × 8 cm, and the two pieces were stacked on each other and heat-sealed using a heat sealing tester (TP-701-B manufactured by Tester Sangyo Co., Ltd.). The gauge pressure was 0.2 MPa, the sealing time was 1 second, and only the upper one of the sealing bars was heated. The heat sealing was conducted at different temperatures of 110°C, 120°C, 130°C, and 140°C. In the heat sealing, the sealing bars were made in contact with the first layers, and the second layers were placed in face-to-face contact with each other.

The heat-sealed sample was subjected to T-peel test using Autograph (AGS-X manufactured by Shimadzu Corporation) at a test speed of 100 mm/min. The heat sealing strength was determined as an average of measured values (N = 3).

### • Inspection of State of First Layer (Base Layer)

After the heat sealing, the state of the first layer was inspected. When the first layer was free of damage such as a wrinkle or tear, a score of "Good" was given. When any such damage was found, a score of "Poor" was given.

### (Example 1)

To 100 parts by weight of P3HB3HH-1, which is shown as the resin of the first layer in Table 1, was added 0.5 parts by weight of a nucleating agent. The mixture was kneaded using a twin-screw extruder (TEM 26 manufactured by Toshiba Machine Co., Ltd.) at a barrel temperature of 150°C, a screw rotational speed of 100 rpm, and a discharge rate of 10 kg/h. The melted and kneaded mixture was extruded into a strand from a die, and the strand was put into a water bath heated to 40°C to solidify the strand. The solidified strand was cut by a pelletizer, and thus resin composition pellets were obtained.

The resin composition pellets were molded using an blown film molding machine (manufactured by Hokushin Sangyo Co., Ltd.) including a single-screw extruder with a screw diameter of 50 mm and an blown film molding die (die diameter = 100 mm, lip clearance = 1.0 mm). Specifically, the pellets were put into the extruder and processed at a discharge rate of 10 kg/h, a resin temperature of 165°C, a lay-flat film width of 314 mm (blow-up ratio= 2.0), and a haul-off speed of 5 m/min. As a result, a 35-µm-thick resin film (first layer) was obtained.

Subsequently, P3HB3HH-2, which is shown as the resin of the second layer in Table 1, was used to obtain resin composition pellets under the conditions as described above. The pellets were then processed under the conditions as described above, and thus a 35-µm-thick resin film (second layer) was obtained.

The obtained films were aged at 50°C for 1 week, after which the first and second layers were stacked on each other and bonded together using a vacuum laminator (Module Laminator LM-50 × 50-S manufactured by NPC Incorporated) at a temperature of 100°C and a pressure of 2 atmospheres. As a result, a multilayer film was obtained.

For the obtained multilayer film, the measurement of the heat sealing strength and the inspection of the state of the first layer were conducted as described above. The evaluation results obtained are summarized in Table 1.

### (Examples 2 to 4 and Comparative Examples 1 and 2)

Multilayer films were obtained and evaluated in the same manner as in Example 1, except that the types of the resins used were changed as shown in Table 1 and that the thicknesses of the resin films were changed as shown in Table 1. The evaluation results obtained are summarized in Table 1.

**[Table 1]**

| | | | Example 1 | Example 2 | Example 3 | Example 4 | Comp. Example 1 | Comp. Example 2 |
|---|---|---|---|---|---|---|---|---|
| First layer | | Resin | P3HB3HH-1 | P3HB3HH-1 | P3HB3HH-1 | P3HB3HH-1 | P3HB3HH-1 | P3BB3HH-1 |
| | | Latent heat ΔH [J/g] | 38 | 38 | 38 | 38 | 38 | 38 |
| | | Layer thickness [um] | 35 | 100 | 35 | 35 | 35 | 100 |
| Second layer | | Resin | P3HB3HH-2 | P3HB3HH-2 | P3HB3HH-2 | P3HB3HH-3 | P3HB3HH-2 | P3HB3HH-1 |
| | | Latent heat ΔH [J/g] | 22 | 22 | 22 | 21 | 22 | 38 |
| | | Layer thickness [um] | 35 | 35 | 100 | 35 | 200 | 35 |
| Heat sealing temperature | 110°C | Sealing strength [N/15 mm] | 6 | 0 | 0 | 10 | 0 | 0 |
| | | Damage to first layer | Good | Good | Good | Good | Good | Good |
| | 120°C | Sealing strength [N/15 mm] | to | 0 | 0 | 12 | 0 | 0 |
| | | Damage to first layer | Good | Good | Good | Good | Good | Good |
| | 130°C | Sealing strength [N/15 mm] | 12 | 6 | 12 | 14 | 0 | 0 |
| | | Damage to first layer | Good | Good | Good | Good | Good | Good |
| | 140°C | Sealing strength [N/15 mm] | 12 | 12 | 12 | 14 | 2 | 6 |
| | | Damage to first layer | Poor | Good | Poor | Poor | Poor | Good |

Table 1 reveals the following findings. In Example 1, the heat sealing was accomplished without damage to the base layer over the heat sealing temperature range of 110 to 130°C. Good results were obtained over the heat sealing temperature range of 130 to 140°C in Example 2, at a heat sealing temperature of 130°C in Example 3, and over the heat sealing temperature range of 110 to 130°C in Example 4.

In contrast, in Comparative Example 1, the heat sealing was not accomplished without damage to the base layer at any heat sealing temperatures. In Comparative Example 2, although the heat sealing was accomplished without damage to the base layer at a heat sealing temperature of 140°C, the sealing strength was not sufficiently high.

The following lists materials used in Example 5 and Comparative Examples 3 to 6.

### [Poly(3-hydroxyalkanoate) Resins]

P3HB3HH-4: Poly(3-hydroxybutyrate-co-3-hydroxyhexanoate) having a copolymerization component ratio, (3-hydroxybutyrate)/(3-hydroxyhexanoate), of 93.8/6.2 (mol/mol) and a weight-average molecular weight of 60 × 10⁴.

P3HB3HH-5: Poly(3-hydroxybutyrate-co-3-hydroxyhexanoate) having a copolymerization component ratio, (3-hydroxybutyrate)/(3-hydroxyhexanoate), of 92.3/7.7 (mol/mol) and a weight-average molecular weight of 60 × 10⁴.

### [Nucleating Agents]

P3HB and behenamide were used.

### [Evaluation Methods]

The following describes methods used for evaluation in Example 5 and Comparative Examples 3 to 6.

### • Measurement of Heat Quantities ΔH of Resin Layers

The heat quantities ΔH were determined by the method described above for Examples 1 to 4 and Comparative Examples 1 and 2.

### • Piercing Resistance

The test specimen was fixed in place with a jig and pierced with a half-round needle having a diameter of 1.0 mm and a tip radius of 0.5 mm at a test speed of 50 ± 5 mm/min. The integral of the test force (N) with respect to the stroke from the start of the test to the moment when the needle penetrated through the test specimen was calculated in units of mJ.

### • Peel Strength

Two films with a suitable size were stacked on each other and subjected to an integrating process (thermal lamination described later) such that one edge of the resulting two-layer film was able to be used as a peel strength measurement area. The sample thus obtained was cut to give a 15-mm-wide test specimen. The test specimen was opened to 180° and its two ends were attached to grips of a tensile tester such that the peel strength measurement area of the test specimen was located at the middle between the grips. The test specimen was pulled until peeling or breakage occurred, and the maximum force (N) was determined and recorded as the peel strength. The test speed was 300 mm/min.

### • Heat Sealability

Two films with a suitable size were stacked on each other, and one edge of the stack of the films was heat-sealed at a lamination temperature of 110°C and a pressure of 0.1 MPa. The sample thus obtained was cut to give a 15-mm-wide test specimen. The test specimen was opened to 180° and its two ends were attached to grips of a tensile tester such that the heat-sealed portion of the test specimen was located at the middle between the grips. The test specimen was pulled until the heat-sealed portion broke, and the maximum force (N) was determined. The distance between the grips was 50 mm or more at the start of the test. The test speed was 300 mm/min.

### [Example 5]

### (Formation of First Layer)

One hundred parts by weight of P3HB3HH-4 was dry-blended with 3 parts by weight of P3HB and 0.5 parts by weight of behenamide which were added as nucleating agents. The resulting resin material (resin mixture) was extrusion-molded using a single-layer blown film molding device at an extrusion temperature of 160°C. Thus, a 30-µm-thick single-layer film was produced.

### (Formation of Second Layer)

One hundred parts by weight of P3HB3HH-5 was dry-blended with 3 parts by weight of P3HB and 0.5 parts by weight of behenamide which were added as nucleating agents. The resulting resin material (resin mixture) was extrusion-molded using a single-layer blown film molding device at an extrusion temperature of 155°C. Thus, a 30-µm-thick single-layer film was produced.

### (Layer Bonding)

The first and second layers obtained as above were bonded together by thermal lamination at a lamination temperature of 110°C and a pressure of 0.1 MPa. Thus, a laminated film (60 µm thick) including the first layer (30 µm thick) and the second layer (30 µm thick) was obtained. For the obtained laminated film, the piercing resistance, peel strength, and heat sealability were measured by the methods described above. The results are shown in Table 2.

### [Comparative Example 3]

One hundred parts by weight of P3HB3HH-4 was dry-blended with 3 parts by weight of P3HB and 0.5 parts by weight of behenamide which were added as nucleating agents. The resulting resin material (resin mixture) was extrusion-molded using a single-layer blown film molding device at an extrusion temperature of 160°C. Thus, a 60-µm-thick single-layer film was produced. For the obtained single-layer film, the piercing resistance was measured by the method described above. The result is shown in Table 2.

### [Comparative Example 4]

One hundred parts by weight of P3HB3HH-5 was dry-blended with 3 parts by weight of P3HB and 0.5 parts by weight of behenamide which were added as nucleating agents. The resulting resin material (resin mixture) was extrusion-molded using a single-layer blown film molding device at an extrusion temperature of 155°C. Thus, a 60-µm-thick single-layer film was produced. For the obtained single-layer film, the piercing resistance was measured by the method described above. The result is shown in Table 2.

### [Comparative Example 5]

One hundred parts by weight of P3HB3HH-4 was dry-blended with 3 parts by weight of P3HB and 0.5 parts by weight of behenamide which were added as nucleating agents. The resulting resin material (resin mixture) was extrusion-molded using a single-layer blown film molding device at an extrusion temperature of 160°C. Thus, a 30-µm-thick single-layer film was produced. For the obtained single-layer film, the piercing resistance was measured by the method described above. The result is shown in Table 2.

### [Comparative Example 6]

One hundred parts by weight of P3HB3HH-5 was dry-blended with 3 parts by weight of P3HB and 0.5 parts by weight of behenamide which were added as nucleating agents. The resulting resin material (resin mixture) was extrusion-molded using a single-layer blown film molding device at an extrusion temperature of 155°C. Thus, a 30-µm-thick single-layer film was produced. For the obtained single-layer film, the piercing resistance was measured by the method described above. The result is shown in Table 2.

**[Table 2]**

| | | Example 5 | Comp. Example 3 | Comp. Example 4 | Comp. Example 5 | Comp. Example 6 |
|---|---|---|---|---|---|---|
| First layer | Resin | P3HB3HH-4 | P3HB3HH-4 | | P3HB3HH-4 | |
| | Latent heat ΔH [J/g] | 42 | 42 | | 42 | |
| | Layer thickness [um] | 30 | 60 | | 30 | |
| Second layer | Resin | P3HB3HH-5 | | P3HB3HH-5 | | P3HB3HH-5 |
| | Latent heat ΔH [J/g] | 25 | | 25 | | 25 |
| | Layer thickness [um] | 30 | | 60 | | 30 |
| Piercing resistance [mJ] | | 12.8 | 7.5 | 7.9 | 3.7 | 3.9 |
| Peel strength [N/15 mm] | | 8 | - | - | - | - |
| Heat sealability [N/15 mm] | | > 5 | - | - | - | - |

As seen from Table 2, the laminated film of Example 5, which included the first and second layers, had higher piercing resistance than the single-layer films of Comparative Examples 3 and 4 each of which consisted only of either the first or second layer, despite the fact that the film of Example 5 had the same thickness as the films of Comparative Examples 3 and 4. Additionally, as seen from Table 2, the piercing resistance of the laminated film of Example 5 was twice or more those of the single-layer films of Comparative Examples 5 and 6 each of which had a thickness of 30 µm equal to half the thickness of the film of Example 5. These results have demonstrated that the integration of the first and second layers synergistically increases the piercing resistance.

## Claims

1. A multilayer film comprising:
a first resin layer; and
a second resin layer, wherein
each of the first and second resin layers comprises a poly(3-hydroxyalkanoate) resin,
a ratio of a thickness of the first resin layer to a thickness of the second resin layer is from 1.0:0.015 to 1.0:5.0,
a heat quantity ΔH of the first resin layer is 30 J/g or more,
a heat quantity ΔH of the second resin layer is 25 J/g or less, and
the heat quantity ΔH of each of the first and second resin layers is expressed by the following formula: heat quantity ΔH = heat of melting over a temperature range of 130 to 190°C.

2. The multilayer film according to claim 1, wherein the thickness of the first resin layer is from 10 to 300 µm.

3. The multilayer film according to claim 1 or 2, wherein the poly(3-hydroxyalkanoate) resin of the first or second resin layer comprises a copolymer of 3-hydroxybutyrate units and other hydroxyalkanoate units.

4. The multilayer film according to any one of claims 1 to 3, wherein
the poly(3-hydroxyalkanoate) resin of the first resin layer is a copolymer which is a copolymer of 3-hydroxybutyrate units and other hydroxyalkanoate units and in which a content of the other hydroxyalkanoate units is from 1 to 7 mol%,
the poly(3-hydroxyalkanoate) resin of the second resin layer is a copolymer which is a copolymer of 3-hydroxybutyrate units and other hydroxyalkanoate units and in which a content of the other hydroxyalkanoate units is from 7 to 20 mol%, and
the content of the other hydroxyalkanoate units in the poly(3-hydroxyalkanoate) resin of the second resin layer is higher than the content of the other hydroxyalkanoate units in the poly(3-hydroxyalkanoate) resin of the first resin layer.

5. The multilayer film according to claim 3 or 4, wherein the other hydroxyalkanoate units are 3-hydroxyhexanoate units.

6. The multilayer film according to any one of claims 1 to 5, wherein the first and second resin layers are integral with each other.

7. The multilayer film according to any one of claims 1 to 6, wherein
the thickness of the first resin layer is from 10 to 300 µm, and
the thickness of the second resin layer is from 5 to 70 µm.

8. The multilayer film according to any one of claims 1 to 7, wherein the first resin layer and/or the second resin layer further comprises a nucleating agent.

9. The multilayer film according to claim 8, wherein the nucleating agent comprises at least one selected from the group consisting of poly(3-hydroxybutyrate) (P3HB), talc, a fatty acid amide, a nucleic acid base, and a dipeptide.

10. The multilayer film according to any one of claims 1 to 9, wherein the multilayer film is adapted for heat sealing.

11. A method for producing the multilayer film according to any one of claims 1 to 10, the method comprising the steps of:
(A) forming each of the first and second resin layers individually by blown film molding or T-die molding; and
(B) integrating the first and second resin layers obtained in the step (A) by thermal lamination.

12. A method for producing the multilayer film according to any one of claims 1 to 10, the method comprising the step of forming the first and second resin layers together by multilayer blown film molding or multilayer T-die molding.

13. A packaging material comprising the multilayer film according to any one of claims 1 to 10.

14. The packaging material according to claim 13, wherein the packaging material is in the form of a pillow pack.
